# EUROPEAN PATENT APPLICATION

(11) **EP 0 761 081 A1**
(43) Date of publication of application: **12.03.1997**
(21) Application number: 96202231.5
(22) Date of filing: 08.08.1996
(51) Int. Cl.: A01B 59/048

(54) **A pusher arm and also an assembly of pusher arms in the coupling mechanism between farm tractor and farm implement**

(30) Priority: 14.08.1995 NL 1000976
(71) Applicant: Netagco Holding B.V., 8211 AL Lelystad (NL)
(72) Inventor: Mutsaers, Franciscus Hubertus Johannes, 9625 PC Overschild (NL)
(74) Representative: Louet Feisser, Arnold

(57) **Abstract**

The invention relates to a pusher arm (3,4) and also to an assembly of pusher arms (3,4) in the coupling mechanism between a farm tractor and a farm implement being pushed forward by said tractor. In particular when an implement, for example a tillage implement, is mounted on the front side of the tractor, this may have an undesirable constraining effect on the steering of the combination. This adverse effect may largely be eliminated by attaching the implement in such a manner that the implement assists in the steering when being moved by the tractor. The invention provides a solution whereby the implement is pushed forward by means of load-dependent pusher arms (3,4) which are variable in length.

## Description

The present invention relates to a pusher arm and also to an assembly of pusher arms by means of which a farm implement can be moved forward by a farm tractor in such manner as to assist in the steering.

For a number of cultivating operations it may be advisable when an implement mounted on the front side of the tractor is not rigidly attached to the tractor in lateral direction. This prevents the constraining effect of the implement on the movement of the tractor, in particular in bends. The manoeuvrability of the combination or of the tractor or the implement may be increased by hitching the implement to the tractor in such manner as to assist in the steering. The implement thereby directs itself in a direction steered by the tractor.

A number of solutions are known from the literature on this field. DE 34 19 174 discloses a construction which is built to extend from the front side of the tractor over the implement, in such a manner that the implement can be drawn forward from the free end. This construction takes up a great deal of space and blocks the tractor driver's view, so that it will have to be attached and detached along with the implement. Moreover, because of the differences in the desired height and length it cannot be universally used for implements of a varying nature.

Another solution is known from DE 36 07 691. This patent specification discloses a construction which is placed between the front power lift of the tractor and the implement. An imaginary pulling or pushing point (Momentanpol), which is located in front of the implement, seen in the direction of movement, is created by means of a system of rods or a shell construction. This is a more universal construction, which takes up less space than the aforesaid solution. The use of a pulling point which has been shifted to the front is obvious. The use of a pushing point which has been shifted to the front is limited, however, insofar as the manoeuvrability and stability of the implement are concerned. The construction disclosed is complex and comprises a number of additional transmissions. In addition to that the converging structure of the system of rods runs counter to the diverging, mostly stable structure of a standard front power lift. Partly because of this the solution requires an additional constructional effort in order to make the whole sufficiently strong, which in particular plays a role when lifting and transporting the implement.

The object of the present invention is to realise a more functional attachment between tractor and front-mounted implement, whereby the implement directs itself in the direction in which it is steered by the tractor. The functionality is thereby measured on the basis of several factors: the possibility of fitting in the attachment in the usual attachment section between tractor and implement, the amount of space that is required, the universal applicability, the possibility of connecting and disconnecting, the degree to which the construction can be loaded when not in use (lifting), and the degree to which it assists in solving other steering problems.

This objective is accomplished by the present invention by starting from the usual diverging manner of construction of the assembly of front lifting arms. When carrying out a cultivating operation with for example a tillage implement which is attached to the front power lift of a tractor, the propelling force is substantially transmitted to the implement via the front lifting arms. These arms generally diverge from the tractor towards the implement. Because of the manner in which said arms function they are most suitably described as lift-push arms. Within the framework of the present application their functioning as pusher arms is relevant, which is why the term pusher arm is used herein.

When the implement is moved in a straight line and is mounted and loaded in a symmetric manner (widthwise), the load which the implement exerts on the tractor will be evenly distributed over the two pusher arms. When a bend is made the ground will exert a lateral force on the implement, as a result of which the implement will tend to lag behind the lateral movement of the tractor. In the case of diverging pusher arms and a bend to the right the load in the longitudinal direction of the right-hand pusher arm will increase and the load in the longitudinal direction of the left-hand pusher arm will decrease. This distribution of the load in bends can be used in a simple manner if it is desired to have the implement assist in the steering.

The present invention provides a construction wherein the increasing load in the longitudinal direction of a pusher arm of an assembly of diverging pusher arms causes said pusher arm to become shorter and wherein the decreasing load in the longitudinal direction of a pusher arm causes said pusher arm to become longer. This will lead to the desired steering effect, whereby the implement being pushed forward positions itself with respect to the tractor in the direction in which it is being steered by the tractor.

Depending on the use the construction in question may be mounted on the tractor, on the implement or between tractor and implement. When the construction is mounted on the tractor it will in many cases be possible to replace the existing pusher arms of the front power lift by load-dependent pusher arms which are variable in length. When the construction is mounted between the tractor (with front power lift) and the implement it will in most cases be possible to place the pusher arms according to the invention directly above or below or beside the front lift arms. In these cases the existing attachment points on the implement can usually be maintained.

Of course it is also possible to integrate the pusher arms according to the present invention in the implement. In all these cases the total length of the combination of tractor and implement will hardly be increased, if at all.

A load-dependent pusher arm which is variable in length may be constructed in various manners. Important is thereby that the effective length, that is the shortest distance between the point of attachment on the tractor and the point of attachment on the implement changes under the influence of the load in the direction of said effective length.

A pusher arm which is variable in length may be constructed in a simple manner, inter alia comprising two parts which telescope into one another. When the arm is loaded in transverse direction, for example on lifting the implement, a sufficiently strong combination may be composed in a simple manner from standard sections. In addition to that a construction of this type can readily be fixed in situations in which the effect aimed at by the invention is not desired.

A pusher arm which is variable in length can be made load-dependent in a simple manner by means of any spring-loaded system that acts in the longitudinal direction of the pusher arm. When two or more pusher arms are combined this may be said to constitute an assembly of pusher arms. Within such an assembly the load on and the change in length of the individual pusher arms may be coupled directly or indirectly. Such a coupling will optimize the intended steering effect. In coupled condition the pusher arms assume a length at which the individual loads in the longitudinal direction of the pusher arms are in balance with each other. As a rule this is the case when the implement runs true with the direction in which it is being steered by the tractor. In that case the implement is positioned in relation to the direction in which it is being moved. In the special case of the implement being loaded asymmetrically, the balance in load may be shifted by means of a disproportionate change in the length of the coupled pusher arms.

Depending on the use the angle at which the individual pusher arms diverge may be adjusted. The steering behaviour of the combination of tractor and implement can thus be influenced. The angle determines the degree to which differences in load on the pusher arms occur. By using unequal angles it is moreover possible to compensate for an asymmetric load on the implement.

Depending on the use the implement to be steered may be provided with additional stabilization in lateral direction, for example tracking discs, thus optimizing the transmission of forces on and the distribution of forces over the pusher arms.

Depending on the use the assembly of pusher arms may be used for automatically positioning the implement transversely to the direction of movement. This plays a role particularly when the pusher arms form part of a steering system whereby a desired lateral movement of the implement is transmitted to the implement by means of a forced angular displacement of the pusher arms.

The invention will be explained in more detail below with reference to that which is known from prior art and to a few embodiments of the invention.
Figures 1a and 1b are plan views of a system of pusher arms according to prior art;
Figures 2a, 2b, 2c and 2d are side views of a few examples of pusher arms according to the invention;
Figure 3 is a plan view of an assembly of independent pusher arms according to the invention;
Figure 4 is a plan view of an assembly of pusher arms according to the invention, which are hydraulically coupled;
Figures 5a and 5b are plan views of an assembly of pusher arms according to the invention, which are coupled by means of a rocker piece;
Figure 6 is a plan view of an assembly of pusher arms whose direction of operation can be individually adjusted;
Figure 7 is a plan view of pusher arms which may be used as a signal processor in a steering system.

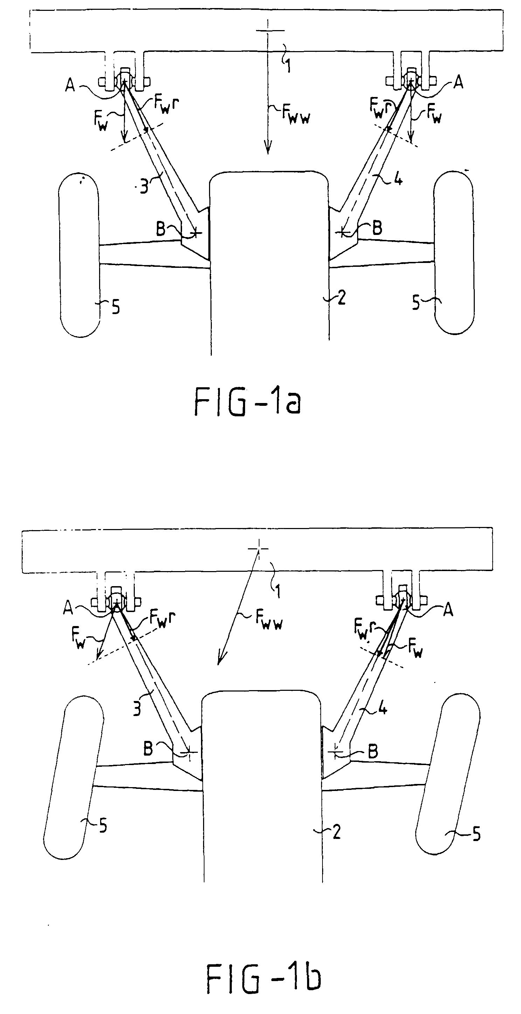

Figure 1a shows a situation according to prior art, wherein implement 1 is pushed forward by tractor 2 via pusher arms 3 and 4. The pusher arms have a fixed diverging position relative to the longitudinal direction of the tractor. The point of attachment of the pusher arms to the implement is indicated at A, the point of attachment of the pusher arms to the tractor is indicated at B. The working length of a pusher arm may be determined to be the distance A-B. The direction of the working length may be determined to be the direction of line AB. The steering front wheels 5 steer the whole in a straight line. This results in a force Fww exerted on the implement by the ground, which force is exerted on the pusher arms as load Fw by the implement. This results in load Fwr in the direction of the working length. From the Figure it may be concluded that in the case of a rectilinear movement the load Fwr is the same in both pusher arms.

In Figure 1b the combination of tractor and implement makes a bend to the right. As a result of the different angle of load Fw with the individual pusher arms 3 and 4 the load Fwr developed in the right-hand pusher arm 4 will be larger than that in the left-hand pusher arm.

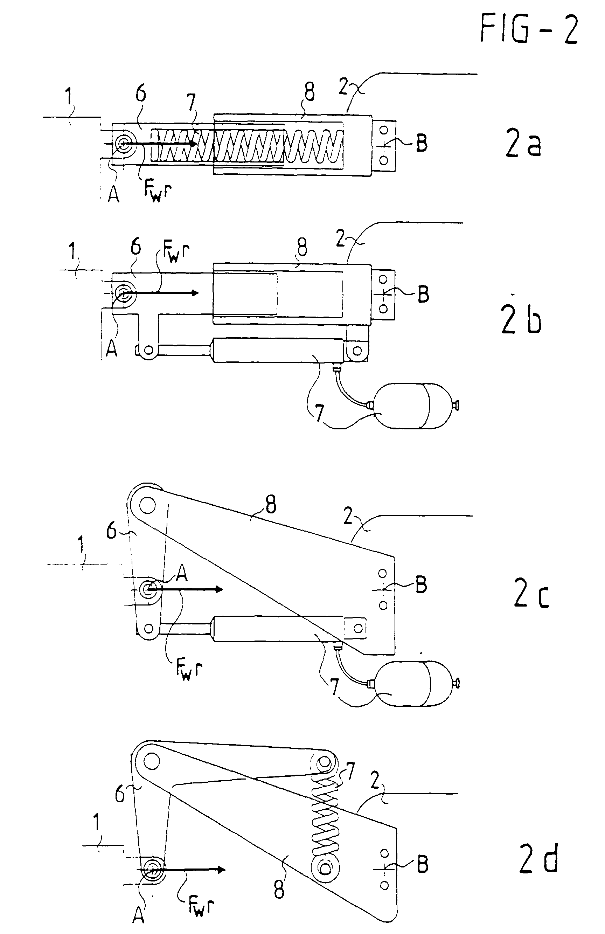

Figures 2a - 2d show a number of embodiments of a pusher arm according to the invention. The Figures show the pusher arms in perpendicular side view. The individual arms are composed of a part 6 connected to the implement in point of attachment A and a part 8 connected to the tractor in point of attachment B. A tension is exerted on parts 6 and 8 by spring element 7. Said tension is directed at the largest possible length A-B and as such opposes the load Fwr exerted by the implement. In Figures 2a and 2b parts 6 and 8 are capable of capable of telescoping movement with respect to each other, in Figures 2c and 2d said parts are capable of pivoting movement. In Figure 2a the spring element 7 is a tension spring, in Figure 2d it is a compression spring. In Figures 2b and 2c the spring element consists of a hydraulic cylinder coupled to an air receiver.

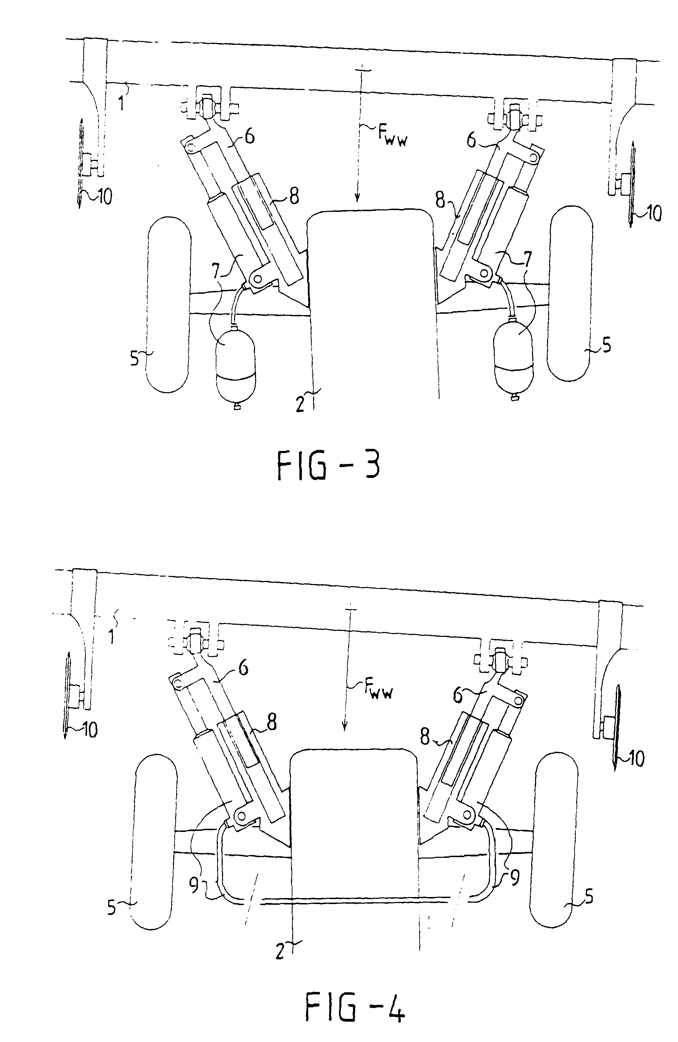

Figure 3 shows a situation which is comparable to the situation shown in Figure 1, with this difference that pusher arms according to the invention are used in Figure 3. The combination is making a bend to the right. An increased load in the longitudinal direction of the right-hand pusher arm will result in a shorter working length. A decreased load in the longitudinal direction of the left-hand pusher arm will result in a longer working length. As a result of this the implement takes up an oblique position with respect to the tractor and directs itself in the direction in which it is steered by the tractor. Implement 1 is provided with tracking discs 10. These discs enhance the stability in lateral direction of the implement. This assists in distributing the load over the lifting arms and in obtaining the intended steering effect.

Figure 4 shows a situation which is comparable to the situation shown in Figure 3, with this difference that an assembly of coupled pusher arms according to the invention is used in Figure 4. The coupling is effected hydraulically by means of the interconnected cylinders 9, which determine the length of the pusher arms. An increased load in the longitudinal direction of the right-hand pusher arm will result in a higher pressure in the right-hand cylinder 9, a decreased load in the longitudinal direction of the left-hand pusher arm will result in a lower pressure in the right-hand cylinder 9. When the pressure difference is levelled out this will lead to the desired positioning of the implement in relation to the (changing) direction of movement.

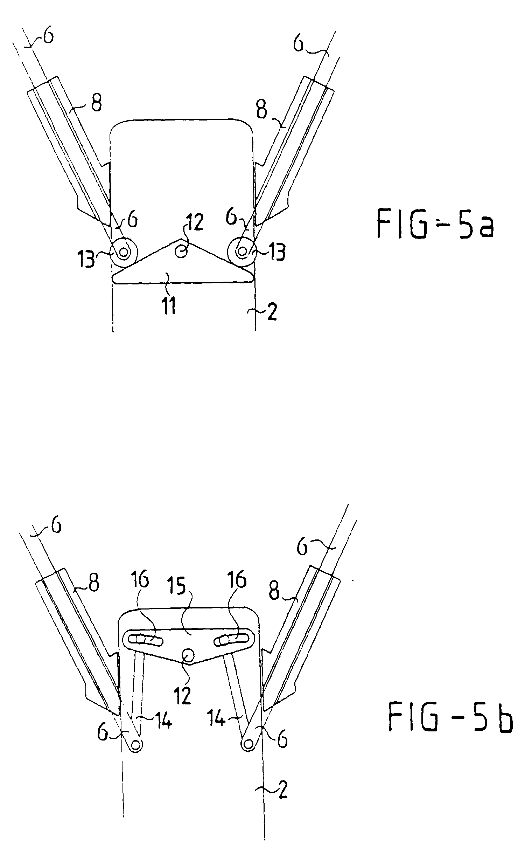

Figures 5a and 5b each show a detail of an assembly of coupled pusher arms according to the invention, whereby the coupling is effected via a rocker piece, which can pivot about vertical axis 12. Figure 5a shows an embodiment wherein the parts 6 connected to the implement engage rocker piece 11 by means of rollers 13. Any differences in load that occur are levelled out by a change in position of the rocker piece, thus realizing the positioning of the implement in relation to the direction of movement. Figure 5b shows an embodiment wherein the parts 6 connected to the implement engage rocker piece 15 by means of auxiliary arms 13. Any differences in load that may occur are levelled out by a change in position of the rocker piece. The balance in load may be shifted in favour of one of the pusher arms by adjusting the attachment of the auxiliary arms 14 in the slotted holes.

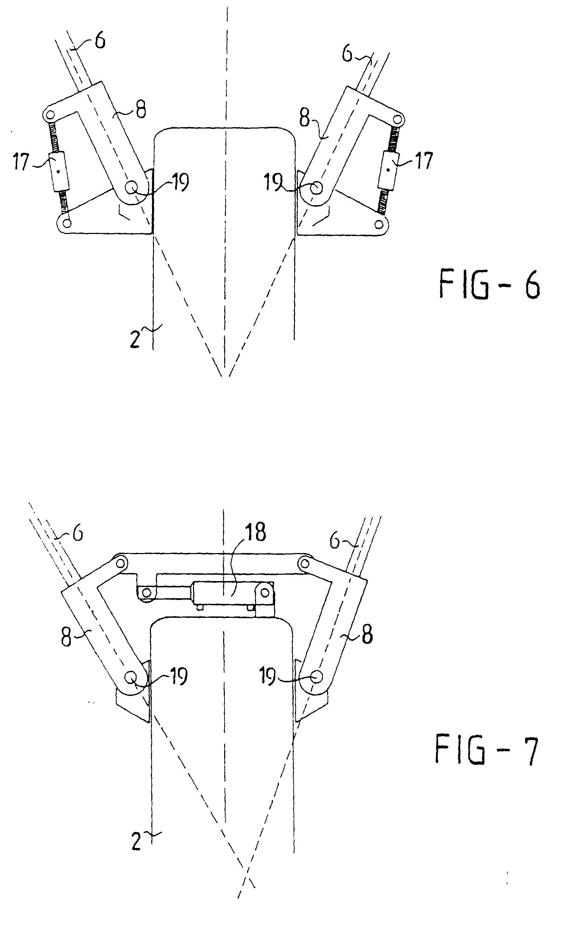

Figure 6 shows a detail of an assembly of pusher arms according to the invention, wherein the pusher arms are attached to the tractor in such manner as to be capable of pivoting movement about vertical axes 19. The diverging position of the individual pusher arms may be adjusted by means of the spindles 17.

Figure 7 shows an embodiment which is comparable to the one shown in Figure 6. In this embodiment the diverging position of the coupled pusher arms is adjusted by means of cylinder 18. This causes the implement to move laterally with respect to the tractor, for example in execution of a steering signal in an automatic system. By the pusher arms the implement is automatically positioned in relation to the direction of movement thereby.

Although the invention has been described by means of preferred embodiments, it is to be understood that numerous alterations are possible without departing from the scope of the present invention as defined in the claims. Thus it is possible to integrate the above-described means in the coupling mechanism between tractor and implement, including the tractor and the implement themselves, in such a manner that the term arms, recognizable as such, is hardly applicable any more.

## Claims

1. A pusher arm having a predominantly horizontal working direction, which forms part of the coupling mechanism between farm tractor and pushed farm implement, characterized in that the working length of the pusher arm is partly determined by the load exerted on said pusher arm in the direction of said working length.

2. A pusher arm according to claim 1, characterized in that within a predetermined load range an increasing load in the direction of the working length will lead to a shorter working length of the pusher arm and a decreasing load in the direction of the working length will lead to a longer working length of the pusher arm

3. A pusher arm according to claim 1 or 2, characterized in that a decrease or an increase of the working length will result in a decrease or an increase respectively of a tension applied directly or indirectly in or on said pusher arm, which is of opposite sense to the load exerted by the implement.

4. An assembly of pusher arms having a diverging, predominantly horizontal working direction, which forms part of the coupling mechanism between farm tractor and pushed farm implement, characterized in that said assembly consists of at least two pusher arms according to claims 1, 2, or 3.

5. An assembly according to claim 4, characterized in that the decrease and increase of the working lengths of the individual pusher arms are somehow coupled within said assembly.

6. An assembly according to claim 5, characterized in that a change in the working length of the one pusher arm initiates a flow which will result in an opposite change in the working length of the other pusher arm.

7. An assembly according to claim 5, characterized in that a change in the working length of the one pusher arm will result in a change in position of a rocker piece, which will result in an opposite change in the working length of the other pusher arm.

8. An assembly according to any one of the claims 5 - 7, characterized in that the changes in the working length of the individual pusher arms are coupled in such a manner within said assembly that the change in the working length of the one pusher arm will result in a comparatively larger or smaller change in the working length of the other pusher arm.

9. An assembly according to claim 5, characterized in that the ratio of the relative change in length can be adjusted as required at that moment.

10. An assembly according to any one of the claims 4 - 9, characterized in that the direction in which the individual arms diverge can be adjusted relative to the longitudinal direction of said tractor.

11. An assembly according to any one of the claims 4 - 10, characterized in that said assembly engages the power lift of said tractor or said implement.

12. An assembly according to any one of the claims 4 - 10, characterized in that said assembly is integrated in the power lift of said tractor or said implement.

13. An assembly according to any one of the claims 4 - 10, characterized in that said assembly is integrated in said implement.

14. An assembly according to any one of the claims 4 - 10, characterized in that said assembly is incorporated in a separate attachment, which may be mounted between said tractor and said implement to be pushed forward.

15. A device for attaching a farm implement to the front side of a farm tractor, said device being provided with at least two pusher means, which are on the one hand attached near the front side of said tractor and which are on the other hand attached to said implement, whereby the points of attachment of said pusher means on said tractor are positioned closer together than are the points of attachment on said implement, so that said pusher means diverging in the direction of movement of said tractor, said device being provided with means for reducing or enlarging the distance between the points of attachment of a pusher means when the pushing force between said points of attachment increases or decreases respectively.

16. A method for pushing a farm implement forward at the front side of a farm tractor, wherein at least two pusher means are attached near the front side of said tractor on the one hand and to said implement on the other hand, whereby the points of attachment of said pusher means on said tractor are positioned closer together than are the points of attachment on said implement, so that said pusher means diverging in the direction of movement of said tractor, whereby the distance between the points of attachment of a pusher means decreases or increases when the pushing force between said points of attachment increases or decreases respectively.
